Europäisches Patentamt

European Patent Office

Office européen des brevets

(19)

(11) Veröffentlichungsnummer : **0 064 257**
**B1**

(12) **EUROPÄISCHE PATENTSCHRIFT**

(45) Veröffentlichungstag der Patentschrift : 07.08.85

(21) Anmeldenummer : 82103538.3

(22) Anmeldetag : 27.04.82

(51) Int. Cl.⁴ : **C 05 F 9/02**

(54) **Verrottungsanlage.**

(30) Priorität : 02.05.81 DE 3117451

(43) Veröffentlichungstag der Anmeldung :
10.11.82 Patentblatt 82/45

(45) Bekanntmachung des Hinweises auf die Patenterteilung : 07.08.85 Patentblatt 85/32

(84) Benannte Vertragsstaaten :
AT BE CH FR GB IT LI NL SE

(56) Entgegenhaltungen :
BE-A-  413 106
DE-A- 2 917 048
FR-A-  762 468
FR-A- 1 354 143
FR-A- 1 527 822
FR-A- 1 544 063
FR-E-    85 086
GB-A- 1 083 611
US-A- 3 856 276
US-A- 3 881 707

(73) Patentinhaber : Kany, Manfred
Feldstrasse 9
D-6601 Kleinblittersdorf 5 (DE)

(72) Erfinder : Kany, Manfred
Feldstrasse 9
D-6601 Kleinblittersdorf 5 (DE)

(74) Vertreter : Bernhardt, Winfrid, Dr.-Ing.
Kobenhüttenweg 43
D-6600 Saarbrücken (DE)

Jouve, 18, rue St-Denis, 75001 Paris, France

## Beschreibung

Die Erfindung betrifft eine Verrottungsanlage, insbesondere für Müll, mit in einem Gebäude aufeinanderfolgenden Zellen, in denen das Material durch einen Boden und Seitenwände gehalten ist, mit Einrichtungen zum Belüften der Zellen und mit Einrichtungen zum Umfüllen des Materials von Zelle zu Zelle.

Solche Verrottungsanlagen sind bekannt als bis zu 30 m hohe Bauwerke, in denen das Material auf einer Reihe von Zwischenböden lagert und in bestimmten Zeitabständen jeweils auf den nächstunteren Zwischenboden fallengelassen wird, wobei es sich mischt und umschichtet. Zum Umfüllen auf den nächsten Zwischenboden bzw. in die über diesem gebildete Zelle dienen Öffnungen in den Zwischenböden mit Verschließ- und/oder Bewegungseinrichtungen verschiedenster Art. Auch zusätzliche, teils mit den Umfülleinrichtungen zusammenwirkende, teils unabhängige Mischwerkzeuge sind in Gebrauch.

Der Vorteil dieser Anlagen liegt darin, daß sie das Verrottungsmilieu günstig einzurichten und den Verrottungsvorgang recht gut zu steuern erlauben. Der Aufwand an Gebäude- und Bewegungseinrichtungen ist aber außerordentlich groß, gleiches gilt für Wartung und Instandhaltung. Wichtigster Nachteil im übrigen ist, daß sich Betriebsstörungen, wie durch Verklemmungen von Klappen, Drehböden, Mischarmen usw., oft nur schwer lokalisieren und meist nur mit großem Arbeitsaufwand unter weitgehendem Freischaufeln der Zellenräume beseitigen lassen.

Mietenkompostierung ist demgegenüber einfach und störungsfrei, sonst aber unbefriedigend.

Sie ist überhaupt nur mit grobem Material möglich. Andernfalls ist die Durchlüftung nicht sichergestellt, auch wenn die Miete über einem Belüftungskanal angelegt ist. Die schrägen Böschungen der Miete vereiteln eine genügende Steuerung der Belüftung, immer ist irgendwo ein Zuviel oder Zuwenig. Die Abgabe an Wärme und Feuchtigkeit ist zu hoch ; sie ist ebenfalls nicht genügend steuerbar. Das gilt auch für die Mietenkompostierung in Hallen. Diese verteuert das Verfahren im übrigen wiederum, zumal die Mieten einen nicht geringen Platzbedarf haben, auch für ihre Umschichtung.

Aus der FR-A-1 527 822 ist eine Art Miete mit senkrechten Wänden, nämlich in einer langen Wanne, bekannt. Ein mit Mitnehmern versehener Plattenbandförderer ist auf den Längsrändern der, oben offenen, Wanne verfahrbar und ragt in sie hinein. Jeweils mit einem Durchgang vom Ende bis zum Anfang der Wanne fördert er das Material um einen Schritt weiter und wälzt es um.

Auch in dieser Anlage ist keine zufriedenstellende Steuerung der Verrottung möglich.

Der Erfindung liegt die Aufgabe zugrunde, eine Verrottungsanlage zu schaffen, die einfach, betriebssicher, hinreichend steuerbar und leistungsfähig ist.

Gemäß der Erfindung erfüllt diesen Zweck eine Verrottungsanlage der eingangs bezeichneten Art, bei der die Zellen in einer niedrigen Halle in einer Reihe, oben offen, mit Längsseiten aneinanderliegen, jeweils mit einer Schmalseite an einem gemeinsamen Gang liegen und hier durch Türen zugänglich sind für die Einrichtungen zum Umfüllen des Materials, die in einer auf dem Gang entlang der Zellenreihe verfahrbaren und in die Zellen einfahrbaren Einheit zusammengefaßt sind und eine jeweils über die Zellenwand hinweg zur nächsten Zelle führende Fördereinrichtung aufweisen.

In den nebeneinander angeordneten Zellen verrottet das Material genauso zuverlässig, schnell und steuerbar wie in den übereinander angeordneten. Die Anlage ist jedoch unvergleichlich einfacher und betriebssicherer.

Sie kann ebenerdig in vergleichsweise dünnem Beton errichtet werden und verlangt damit auch einschließlich der niedrigen Halle nur äußerst geringe Anschaffungskosten im Vergleich zu dem Etagenreaktor mit den übereinander angeordneten Zellen, auch ist sie viel haltbarer. Das Umfüllen von Zelle zu Zelle mag zwar etwas aufwendiger als bei diesem sein ; andererseits entfallen jedoch wiederum erhebliche Wartungs- und Instandhaltungsarbeiten, die die umfangreichen Bewegungseinrichtungen des Etagenreaktors verlangen. Allein der Wegfall fast jeglichen Rostschutzes — außer der Umfülleinrichtung kann nahezu die gesamte Anlage aus Beton und anderen nichtrostenden Materialien bestehen — fällt als Ersparnis ins Gewicht.

Zugleich läßt sich die neue Anlage viel besser in die Landschaft einpassen. Sie kann, vor allem in unebenem Gelände, teilweise oder sogar ganz in die Erde eingelassen, mit Rasen überdeckt werden o. dgl. Oft wird dies den Bau einer leistungsfähigen Verrottungsanlage überhaupt erst ermöglichen, da die Etagenreaktoren bebauungsrechtlich nur an wenigen Stellen zulässig sind.

Betriebssicherer ist die erfindungsgemäße Verrottungsanlage schon insofern, als die im wesentlichen ebenerdige Anordnung alle Zellen und das darin lagernde Material leichter zugänglich macht und sich auch im übrigen gegenüber dem Etagenreaktor weitgehende Vereinfachungen ergeben.

Die vorgesehenen Einrichtungen zum Umfüllen des Materials sind im Störungsfalle immer leicht zugänglich und sogar kurzerhand gegen eine andere solche Einheit auswechselbar. Sie sind beides aber auch jederzeit und ohne Betriebsunterbrechung der Verrottungsanlage für normale Wartungen, Überprüfungen und Reparaturen. Das ist für sich den Vorteil, dient aber der Betriebssicherheit ebenfalls. Darüber hinaus können alle Zellen die Türen derart aufweisen, daß sie notfalls mit Radladern zugänglich sind und freigeschaufelt werden können. Auch auf der dem Gang gegenüberliegenden Seite können die Zellen noch einmal Türen, gegebenenfalls in der Hallenwand, aufweisen, durch die hindurch sie notfalls mit Radladern befahren werden können.

Gegenüber der Anlage nach der FR-A-1 527 822 erlaubt die erfindungsgemäße Verrottungsanlage durch ihre Unterteilung in einzelne Zellen eine wesentlich genauere Steuerung der Milieubedingungen. Sie verhindert außerdem absolut sicher ein Vermischen von Materialmengen verschiedenen Verrottungsgrades. Zur konsequenten Steuerung der Verrottung trägt auch die Anordnung der Zellen in der niedrigen Halle bei, wobei überdies die Aneinanderreihung der Zellen mit ihren Längsseiten die Halle kompakter macht und die Größe der Außenwandflächen der Zellen und der Halle im Verhältnis zum Rauminhalt vermindert, so daß die bei der Verrottung erzeugte, zugleich aber für die Verrottung notwendige, Wärme besser gehalten wird. Erst recht ins Gewicht fallen diese Vorteile im Vergleich zur Mietenkompostierung.

Die Einrichtungen zum Belüften der Zellen weisen zweckmäßig unter den Zellen angeordnete, durch Roste abgedeckte Belüftungskanäle und über den Zellen jeweils Entlüftungen auf.

Die Umfüll-Einheit kann entlang der Zellenreihe mittels einer Fahrbühne verfahrbar und von dieser aus in die Zellen einfahrbar sein auf Schienen, die beiderseits der genannten Roste verlaufen. Zweckmäßigerweise ist sie mit Einrichtungen zum Befeuchten des Materials versehen.

Weiter im einzelnen wird vorgeschlagen, daß die Umfüll-Einheit ein Aufnahmegerät mit einer umlaufenden Kratzkette aufweist, die der Materialfront einen nach oben laufenden Trum zukehrt, von dem mindestens eine Rutsche, gegebenenfalls auch weitere Fördermittel, zurück zu einer Fördereinrichtung führt bzw. führen, z. B. einem Förderband oder einem pneumatischen Förderer.

Hinter dem Abwurfende der Fördereinrichtung ist vorzugsweise ein die Breite der nächsten Zelle im wesentlichen überstreichender Kratzverteiler an der Fördereinrichtung angeordnet.

In die erste der Zellen mündet zweckmäßigerweise eine Materialzuführung, vorzugsweise über einem die Fläche der Zelle im wesentlichen überstreichenden, heb- und senkbaren Kratzverteiler.

Die letzte Zelle weist vorzugsweise einen trichterförmig eingezogenen Boden und an diesem eine Austragseinrichtung auf.

Die Zeichnung gibt ein Ausführungsbeispiel der Erfindung wieder.

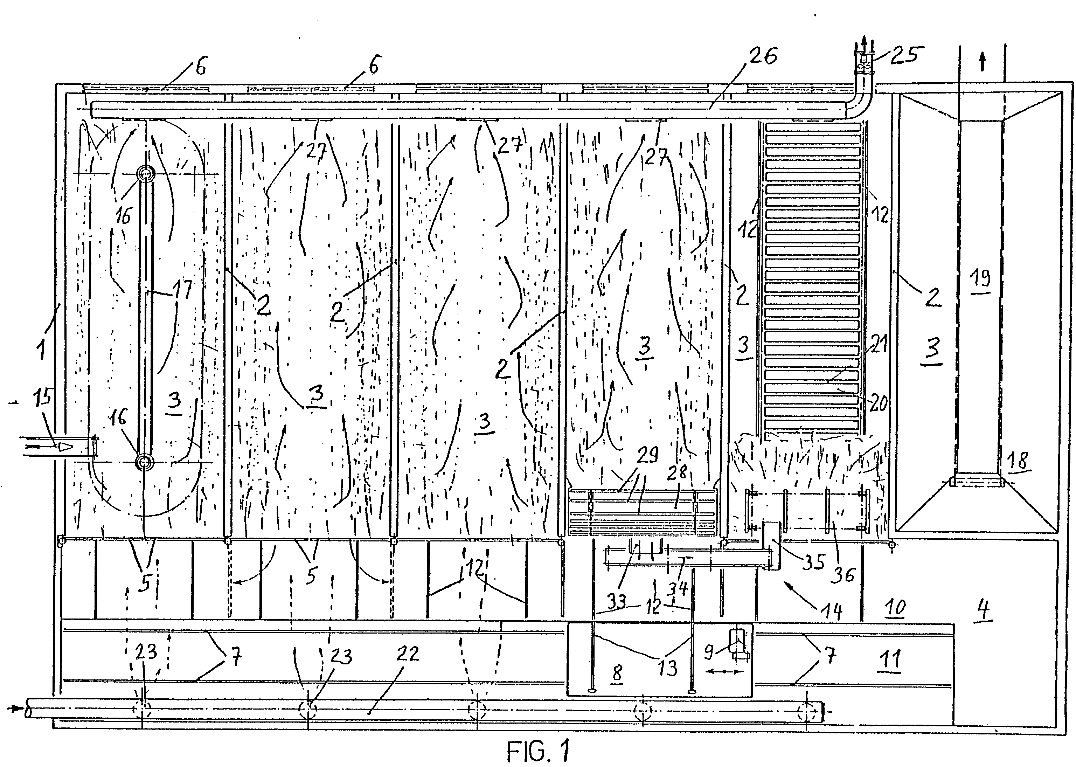

Figur 1 zeigt eine Draufsicht auf eine in einer Halle angeordnete Verrottungsanlage, das Hallendach abgenommen,

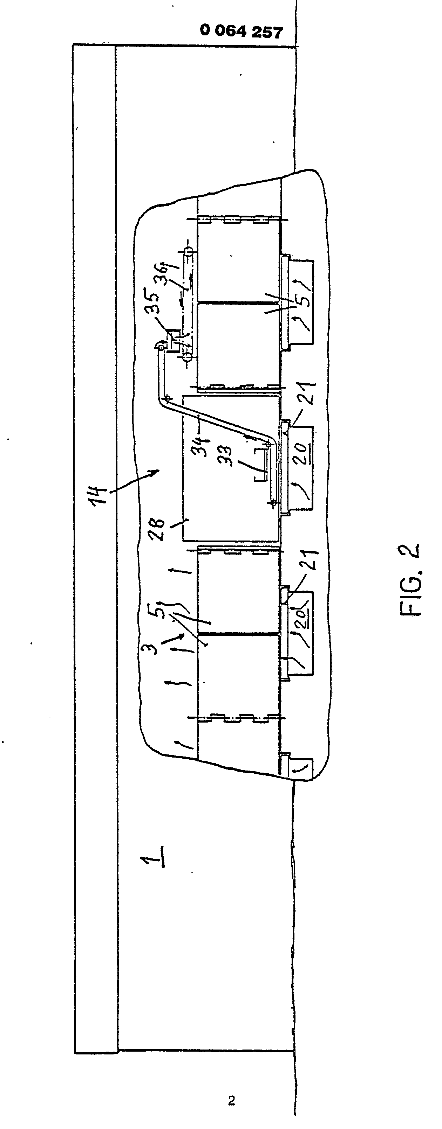

Figur 2 zeigt eine Längsansicht der Verrottungsanlage, die Hallenwand teilweise weggebrochen,

Figur 3 zeigt einen Querschnitt durch die Verrottungsanlage.

In einer flachen Halle 1 sind durch Zwischenwände 2 oben offene, längliche Zellen 3 abgeteilt. Die Länge der Halle und die Zahl der Zellen werden im praktischen Falle wesentlich größer sein als in der zeichnerischen Darstellung.

An den Schmalseiten der Zellen 3 entlang verläuft ein Gang 4. Von diesem aus sind die Zellen 3 durch Doppeltüren 5 auf ihrer ganzen Breite zugänglich. An den anderen Schmalseiten weisen die Zellen in der Hallenwand Türen 6 auf.

In dem Gang 4 ist auf Schienen 7 eine Verschiebebühne 8 mittels eines Antriebs 9 verfahrbar. Die Schienen 7 befinden sich in einem abgesenkten Teil 10 des Ganges 4, derart, daß die Oberseite der Verschiebebühne gleiche Höhe mit dem übrigen Teil 11 des Ganges hat. Dieser ist etwa so breit wie Flügel der Doppeltüren 5. Er weist an jeder Zelle das Ende eines in die Zelle und im wesentlichen auf deren ganzer Länge durch sie hindurchführenden Schienenpaares 12 auf, mit dem ein Schienenpaar 13 auf der Verschiebühne 8 in Flucht gebracht werden kann. Auf den Schienenpaaren 12 und 13 ist eine weiter unten ausführlich beschriebene Umfüll-Einrichtung 14 verfahrbar.

In die erste der Zellen 3 mündet durch die Hallenwand hindurch etwas über der Höhe der Zwischenwände 2 eine Materialzuführung 15. In seiner Betriebsstellung unter dieser und unmittelbar über der vorgesehenen Schütthöhe ist, an von der Hallendecke herab sich erstreckenden Hydraulikzylindern 16 hängend und mittels dieser auf- und abbeweglich, ein nicht näher dargestellter, jedoch an sich bekannter Kratzverteiler 17 angeordnet. Er läuft endlos um und schiebt das Material, das über die vorgesehene Schütthöhe hinaus aufgefüllt ist, jeweils bis dahin weiter, wo diese Höhe noch nicht erreicht ist; dort fällt es weiter ab.

Die letzte Zelle 3 weist einen trichterförmig eingezogenen Boden 18 und an dessen Grund ein durch die Hallenwand aus der Zelle 3 herausführendes Förderband 19 auf.

Zur Belüftung des Materials ist unter jeder Zelle 3 ein Belüftungskanal 20 angeordnet, der durch einen zwischen dem Schienenpaar 12 sich erstreckenden Rost 21 abgedeckt ist. Der Rost 21 kann, ebenso wie sonst der Boden und wie die Wände der Zellen und der Halle, aus Beton bestehen. Die Belüftungskanäle 20 sind aus einer gemeinsamen Luftzufuhrleitung 22 über Abzweigungen 23 mit Ventilatoren o. dgl. 24 jeweils einzeln beaufschlagt. Eine mit einem Ventilator 25 versehene, gemeinsame Abluftleitung 26 weist über den Zellen 3 Ansaugöffnungen 27 auf, die gleichfalls für jede Zelle einzeln einstellbar sein können.

Die Umfüll-Einrichtung 14 weist an einem nicht gezeichneten Maschinenrahmen eine umlaufende Kratzkette 28 mit Stangen 29 auf, derenLänge gleich der Breite der Zellen 3 ist. Der vordere, auf das Material wirkende Trum der Kratzkette 28 läuft nach oben. Von ihm führen zwei zwischen den Trumen angeordnete Rutschen 30 und 31 rückwärts auf zwei kurze Förderbänder 32, die über einer weiteren Rutsche 33 zusammenlaufen, an die sich dann ein Förderband 34 anschließt. Das Förderband 34 läuft schräg nach oben über die Zwischenwand 2 hinweg und hat sein Abwurfende über der nächsten Zelle 3. Um das Material auch auf der Schräge zu halten, ist es mit geeigneten Mitnehmern versehen ; die Schräge kann auch weniger steil eingerichtet werden als in der Zeichnung dargestellt. Unter dem Abwurfende des Förderbands 34 folgt noch einmal ein kurzes Förderband 35 derart, daß der Aufbau des Materials in der betreffenden Zelle mittels eines Kratzverteilers 36 vollständig bis zum Zellenende hin möglich ist, wenn die Kratzkette 28 am Ende der vorangegangenen Zelle anstößt.

Darüber hinaus ist die Umfüll-Einrichtung 14 mit nicht gezeichneten Sprühdüsen zum Befeuchten des Materials während des Umfüllens versehen, um dem Material, das durch die Beund Entlüftung getrocknet wird, die für den Verrottungsvorgang benötigte Feuchtigkeit zu geben. Es könnten aber auch andere Befeuchtungseinrichtungen installiert werden, z. B. über den Zellen.

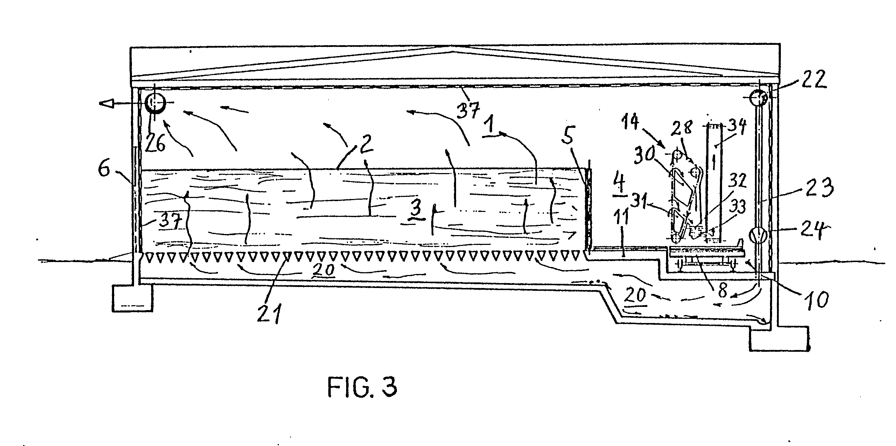

Schließlich ist eine nur in Fig. 3 dargestellte Wärmeisolierung 34 an den Wänden und der Decke der Halle zu nennen. Im Falle einer Anordnung der Zellen im Freien würde man die Zellen abdecken und ebenfalls an den Außenseiten so isolieren, daß die Verrottung in einer wärmeisolierten Baueinheit stattfindet.

Die Arbeitsweise der Anlage ergibt sich im wesentlichen aus der vorstehenden Beschreibung.

Bei einem Umfüllen in Abständen von zwei Tagen ist mit fünfzehn Zellen innerhalb eines Monats ein stabilisierter Kompost erreichbar.

**Patentansprüche**

1. Verrottungsanlage, insbesondere für Müll, mit in einem Gebäude (1) aufeinanderfolgenden Zellen (3), in denen das Material durch einen Boden und Seitenwände (2) gehalten ist, mit Einrichtungen (20-27) zum Belüften der Zellen und mit Einrichtungen (14) zum Umfüllen des Materials von Zelle zu Zelle, dadurch gekennzeichnet, daß die Zellen (3) in einer niedrigen Halle (1) in einer Reihe, oben offen, mit Längsseiten aneinanderliegen, jeweils mit einer Schmalseite an einem gemeinsamen Gang (4) liegen und hier durch Türen (5) zugänglich sind für die Einrichtungen zum Umfüllen des Materials, die in einer auf dem Gang (4) entlang der Zellenreihe verfahrbaren und in die Zellen (3) einfahrbaren Einheit (14) zusammengefaßt sind und eine jeweils über die Zellenwand (2) hinweg zur nächsten Zelle (3) führende Fördereinrichtung (34) aufweisen.

2. Verrottungsanlage nach Anspruch 1, dadurch gekennzeichnet, daß die genannte Einheit (14) entlang der, vorzugsweise geraden, Zellenreihe mittels einer Fahrbühne (8) verfahrbar und von dieser aus in die Zellen (3) einfahrbar ist, vorzugsweise auf Schienen (12).

3. Verrottungsanlage nach Anspruch 1 oder 2, dadurch gekennzeichnet, daß die genannte Einheit (14) ein Aufnahmegerät mit einer umlaufenden Kratzkette (28) aufweist, die der Materialfront einen nach oben laufenden Trum zukehrt, von dem mindestens eine Rutsche (30 ; 31), ggf. auch weitere Fördermittel (32 ; 33), zurück zu der genannten Fördereinrichtung (34) führt bzw. führen, vorzugsweise zu einem Förderband (39) oder einem pneumatischen Förderer.

4. Verrottungsanlage nach einem der Ansprüche 1 bis 3, dadurch gekennzeichnet, daß unter dem Abwurfende der Fördereinrichtung (34) ein die Breite der nächsten Zelle (3) im wesentlichen überstreichender Kratzverteiler (36) an der Fördereinrichtung angeordnet ist.

5. Verrottungsanlage nach einem der Ansprüche 1 bis 4, dadurch gekennzeichnet, daß die Einrichtungen zum Belüften der Zellen (3) unter den Zellen angeordnete, durch Roste (21) abgedeckte Belüftungskanäle (2) aufweisen, vorzugsweise ferner über den Zellen jeweils Entlüftungen (27).

6. Verrottungsanlage nach einem der Ansprüche 1 bis 5, dadurch gekennzeichnet, daß in die erste der Zellen (3) eine Materialzuführung (15) mündet, vorzugsweise über einem die Fläche der Zelle (3) im wesentlichen überstreichenden, heb- und senkbaren Kratzverteiler (17).

7. Verrottungsanlage nach einem der Ansprüche 1 bis 6, dadurch gekennzeichnet, daß die letzte Zelle (3) an ihrem, vorzugsweise trichterförmig eingezogenen, Boden (18) eine Austragseinrichtung (19) aufweist, vorzugsweise ein Förderband (19).

8. Verrottungsanlage nach einem der Ansprüche 1 bis 9, dadurch gekennzeichnet, daß die Einrichtungen zum Umfüllen des Materials von Zelle zu Zelle mit Einrichtungen zum Befeuchten des Materials gekoppelt sind.

**Claims**

1. Decomposing plant, especially for refuse, with a succession of cells (3) which are provided in a building (1) and wherein the material is held by a bottom and by sidewalls (2), with devices (20-27) for aerating the cells and with devices (14) for transferring the material from cell to cell, characterised in that the cells (3) have open tops and are disposed in a row in a low hall (1) with their longer sides adjacent each other and with one short side of each cell adjacent to and accessible by way of a door (5) from a common corridor (4) to material transferring devices which are assembled into a unit (14) that is movable in the corridor (4) along the row of cells and is adapted to be driven into the cells (3), and which comprise a conveying device (34) extending over the wall (2) of the cell and to the next cell (3).

2. Decomposing plant according to claim 1, characterised in that the aforesaid unit (14) is adapted to be transported along the preferably straight row of cells by means of a platform (8) and can be driven from the latter into the cells (3), preferably along rails (12).

3. Decomposing plant according to claim 1 or 2, characterised in that the aforesaid unit (14) comprises a receiving apparatus with a circulating scraper chain (28) which presents to the front side of the material an upwardly moving reach, at least one chute (30 ;31), eventually also additional conveyor means (32 ;33), leading from the upwardly moving reach back to the aforesaid conveying device (34), preferably to a conveyor belt (39) or a pneumatic conveyor.

4. Decomposing plant according to one of Claims 1 to 3, characterised in that a scraper type distributor (36) is adjacent to the conveying device below the discharge end of the conveying device (34) and extends substantially across the width of the next cell (3).

5. Decomposing plant according to one of Claims 1 to 4, characterised in that the devices for aerating the cells (3) comprise aerating channels (20) which are disposed below the cells and are covered by grates (21), and preferably also air evacuating openings (27) above the cells.

6. Decomposing plant according to one of Claims 1 to 5, characterised in that a material supplying device (15) discharges into the first cell (3), preferably above an upwardly and downwardly movable scraper type distributor (17) which substantially sweeps the area of the cell (3).

7. Decomposing plant according to one of Claims 1 to 6, characterised in that the preferably funnel-shaped convergent floor (18) of the last cell (3) is provided with an evacuating device (19), preferably a conveyor belt (19).

8. Decomposing plant according to one of Claims 1 to 7, characterised in that the devices for transferring material from cell to cell are coupled with material moistening devices.

### Revendications

1. Installation de putréfaction, notamment d'ordures, comprenant des cellules (3), disposées à la suite les unes des autres dans un bâtiment (1), dans lesquelles les matières sont retenues par un fond et par des parois latérales (2), avec des dispositifs (20 à 27) d'aération des cellules et des dispositifs (14) de transvasement des matières d'une cellule à l'autre, caractérisée en ce que les cellules, ouvertes vers le haut, sont disposées en série dans une halle (1) située en contre-bas, de manière que leurs bords longitudinaux soient contigus et que chacune d'elles ait un côté étroit donnant sur un passage (4) commun où des portes (5) permettent l'accès de dispositifs assurant le transvasement des matières qui sont groupés dans une unité (14) qui peut se déplacer dans le passage (4) le long de la rangée de cellules et peut pénétrer dans les cellules (3), et sont associées à un dispositif de transport (34) qui, pardessus la paroi de chaque cellule (2), assure le transport jusque dans la prochaine cellule (3).

2. Installation de putréfaction selon la revendication 1, caractérisée en ce que l'unité en question peut se déplacer au moyen d'un chariot transporteur (8) le long de la rangée de cellules, de préférence rectiligne et, à partir de lui, peut pénétrer dans les cellules (3) en se déplaçant de préférence sur des rails (12).

3. Installation de putréfaction selon l'une des revendications 1 ou 2, caractérisée en ce que l'unité déjà mentionnée (14) comporte un appareil de réception comprenant une chaîne de râclage (28) qui tourne vers le front des matières un brin allant vers le haut d'où part ou partent une goulotte (30, 31) ou, le cas échéant, d'autres moyens de transport (32, 33), pour revenir vers le dispositif de transport (34), de préférence vers une bande transporteuse (39) ou un dispositif de transport pneumatique.

4. Installation de putréfaction selon l'une des revendications 1 à 3, caractérisée en ce que sous l'extrémité d'éjection du dispositif de transport (34) elle comporte, dans le dispositif de transport, un répartiteur de râclage (36) qui balaie essentiellement toute la largeur de la cellule suivante.

5. Installation de putréfaction selon l'une des revendications 1 à 4, caractérisée en ce que les dispositifs d'aération des cellules (3) comportent, sous les cellules, des conduits d'aération (2) recouverts par des grilles (21) et, de préférence, au-dessus des cellules, des dispositifs d'évacuation de l'air (27).

6. Installation de putréfaction selon l'une des revendications 1 à 5, caractérisée en ce que, dans la première des cellules (3), un dispositif (15) d'amenée des matières débouche de préférence au-dessus d'un distributeur de râclage (17), susceptible de s'élever et de s'abaisser, qui balaie la surface de la cellule (63).

7. Installation de putréfaction selon l'une des revendications 1 à 6, caractérisée en ce que la dernière cellule (3) comporte, au niveau de son fond (18), de préférence en forme de trémie, un dispositif d'évacuation (19), de préférence une bande transporteuse (19).

8. Installation de putréfaction selon l'une des revendications 1 à 7, caractérisée en ce que les dispositifs assurant le transvasement des matières de cellule à cellule sont accouplées à des dispositifs assurant l'humidification des matières.

FIG. 1

FIG. 2

FIG. 3